# FASCICULE DE BREVET EUROPEEN

(11) **EP 3 077 341 B1**
(45) Date de publication et mention de la délivrance du brevet: **06.03.2019**
(21) Numéro de dépôt: 14825405.5
(22) Date de dépôt: 04.12.2014
(51) Int. Cl.: C03B 40/02, C03B 7/16, C23C 24/04, C03B 9/48, C03B 9/453

(54) **PROCEDE DE FABRICATION D'UN RECIPIENT EN VERRE**
VERFAHREN ZUR HERSTELLUNG EINES BEHÄLTERS AUS GLAS
PROCESS FOR MANUFACTURING A CONTAINER MADE OF GLASS

(30) Priorité: 06.12.2013 FR 1362260
(43) Date de publication de la demande: 12.10.2016
(73) Titulaire: Sofiplast, 69120 Vaulx-en-Velin (FR)
(72) Inventeur: CEAUX, Georges, F-69004 Lyon (FR)
(74) Mandataire: Putet, Gilles
(86) Numéro de dépôt international: PCT/FR2014/053164
(87) Numéro de publication internationale: WO 2015/082851

(56) Documents cités:
- EP-A1- 2 130 944
- DE-U1- 29 615 040
- FR-A1- 2 314 901
- JP-A- H09 194 220
- JP-A- H11 236 225
- US-A- 3 644 133
- US-A1- 2010 132 409

## Description

La présente invention concerne le domaine technique de la fabrication de récipients en verre. L'invention concerne, en particulier, un procédé de fabrication qui utilise un moule dont la surface en contact avec le verre en fusion est recouverte de bisulfure de tungstène, voire un ou plusieurs autre(s) élément(s) de la chaine de production en contact avec le verre chaud ou en fusion qui est (sont) traité(s) de la même manière, ainsi qu'un procédé de revêtement d'éléments pour la mise en oeuvre de ce procédé de fabrication et lesdits éléments.

Dans la fabrication des récipients en verre, la technique utilisant des moules métalliques préchauffés entre 450°C et 550°C avant d'être montés sur les machines, que ce soit en « pressé-soufflé », en « soufflé-soufflé » ou autre, exige de ceux-ci des caractéristiques telles que :
- un transfert thermique convenable,
- un bon état de surface,
- un démoulage rapide,
- une usure minimale,
- une mise en production rapide, et
- un entretien minimum.

Comme le verre fondu adhère au métal des moules et comme les diverses parties de ceux-ci s'usent rapidement lorsqu'elles ne sont pas lubrifiées, un lubrifiant est indispensable.

En outre, pour conserver les qualités nécessaires à la technique même, ce lubrifiant doit :
- ne pas être un isolant thermique,
- résister à la température d'utilisation, comprise entre 600°C et 850°C, et
- conserver intact l'état de surface du moule.

Pour répondre aux exigences d'une production de grande série et respecter l'environnement, le lubrifiant doit notamment :
- être facile à mettre en oeuvre,
- assurer une mise en production rapide,
- assurer une protection durable sans perturber la production,
- ne pas encrasser les moules, et
- n'être ni dangereux, ni toxique, ni polluant, ni salissant.

Actuellement, la solution proposée consiste à appliquer, à la surface des moules utilisés périodiquement (toutes les 2 à 3 moulées), une dispersion de graphite dans un produit pétrolier, tel que le kérosène. Cette application est effectuée à la main à l'aide d'écouvillons ou par pulvérisation à l'aide de buses souvent délicates à positionner. Les inconvénients de cette solution sont nombreux :
- la production est ralentie. En effet, à chaque montage d'un nouveau moule, une période de rodage dite « enverrage » perturbe la production durant une période de 0,5 à 1 heure, représentant environ 0,5 à 1% du temps total de production.
- L'application s'effectue sur des moules à température élevée, de sorte que le produit du pétrole s'évapore rapidement et revêt le moule et l'appareillage environnant, d'un film gras. L'accumulation de ce film au cours des opérations (x fois par heure) nécessite le démontage et le nettoyage des moules toutes les 24 heures, cette opération représente environ 20 mn par moule, soit environ 1% du temps de production. Cela ralentit donc la production et nécessite des manoeuvres par un opérateur.
- De plus, lorsque le produit s'évapore, à chaque application, il abaisse la température du moule et accroît les risques de défauts de pièces.
- Les produits de pétrole s'évaporent instantanément et constituent une atmosphère créant des risques d'incendie. Les vapeurs d'hydrocarbures générées entrainent de graves problèmes de santé, des odeurs désagréables, des volumes importants de fumées.
- Comme l'application du lubrifiant est répétée x fois par heure, il est nécessaire que l'opérateur passe prestement l'écouvillon lorsque l'appareillage fonctionne. Bien que les opérateurs soient très expérimentés et que de rares accidents corporels ou détériorations mécaniques aient été observés, une telle interaction entre l'homme et la machine n'est pas souhaitable.

Aussi, d'autres solutions ont été proposées. Le document EP0274959 décrit un revêtement de parois de moules de verrerie pour la mise en forme d'une paraison, destiné à éviter tout collage de la paraison sur les parois avec lesquelles elle est mise en contact. Ce revêtement consiste en une couche de métal comprenant, en poids, au moins 30 % de molybdène et moins de 4 % de fer, disposée sur au moins les parois venant en contact avec le verre. Néanmoins, de tels revêtements nécessitent une longue phase de polissage.

Le document JP10330122 décrit une matrice de moule dans laquelle des particules de graphite, MoS₂ ou WS₂ sont rajoutées. Néanmoins, l'inconvénient de cette solution est d'avoir une matrice d'acier du groupe 6 qui puisse prendre en compte les molécules de WS2 et de MoS2. Cette incorporation intervient lors de la fabrication du moule, c'est-à-dire à la fonderie.

Aucune de ces solutions ne donnent donc satisfaction. Dans ce contexte, un des buts de l'invention est de remédier aux inconvénients que présentent les techniques antérieures précédemment décrites.

Le document FR 2314901 décrit des compositions anti-adhésives pour moules de fabrication de verre. La composition est une dispersion qui comprend du bisulfure de tungstène, un silicate comme agent liant et un agent de durcissement. En particulier, le but de l'invention est de proposer un procédé de fabrication d'un récipient en verre permettant de diminuer les opérations de lubrification pendant la production, tout en garantissant un minimum de défauts de pièces, notamment en utilisant un lubrifiant qui ne crée pas de risques d'incendie par son évaporation et dont l'application nécessite un minimum d'entretien ou un minimum d'intervention par l'homme.

En ce sens, l'objet de l'invention est un procédé de fabrication d'un récipient en verre comportant une étape de mise en forme d'une paraison au moyen d'un moule dont au moins une surface est revêtue d'un lubrifiant en interface entre ladite paraison et ladite surface du moule, caractérisé en ce que ledit lubrifiant est un lubrifiant solide en bisulfure de tungstène obtenu par projection d'une poudre de bisulfure de tungstène.

On comprend par « en interface » que le lubrifiant correspond à une couche positionnée entre la paraison et le moule, et ainsi, que des échanges thermiques et des interactions mécaniques ont lieu entre la paraison et la surface à travers le lubrifiant.

Le procédé objet de l'invention procure l'avantage déterminant de remplacer le lubrifiant liquide, ce qui permet ainsi de supprimer tous les problèmes, tels que la phase de rodage du moule dite « phase d'enverrage » lors de l'application du lubrifiant et son évaporation. De plus, le bisulfure de tungstène est un bon conducteur de chaleur et est particulièrement résistant aux variations de températures entre 600°C et 850°C rencontrées dans la fabrication de pièces de verre.

Selon des modes de réalisation particuliers, le procédé de fabrication d'un récipient en verre présente une ou plusieurs des caractéristiques additionnelles suivantes, voire toutes ces caractéristiques :
- il comporte en outre une étape d'acheminement de ladite paraison jusqu'au dit moule au moyen d'au moins un canal de distribution dont au moins une surface est revêtue d'un lubrifiant en interface entre ladite paraison et ladite surface du canal, caractérisé en ce que ledit lubrifiant est un lubrifiant solide en bisulfure de tungstène ;
- il comporte en outre une étape de déplacement du récipient en verre chaud, obtenu à la suite de l'étape de mise en forme de la paraison au moyen du moule, sur une plaque d'attente ou de transfert dont la surface qui reçoit le récipient en verre chaud est recouverte d'un lubrifiant solide en bisulfure de tungstène ;
- le lubrifiant solide en bisulfure de tungstène est en partie incrusté dans la surface qu'il revêt et/ou comporte une structuration lamellaire dans la zone délimitant la surface en contact avec ladite paraison ;
- le lubrifiant solide de bisulfure de tungstène présente une épaisseur moyenne appartenant à la gamme allant de 0,4 µm à 1,0 µm ;
   et/ou
- la surface à revêtir de lubrifiant solide de bisulfure de tungstène présente un Ra compris dans la gamme allant de 0,1 µm à 1 µm et/ou présente une dureté comprise dans la gamme allant de 30 HRc à 60 HRc.

Un autre objet de l'invention est un élément pour la fabrication d'un récipient en verre, comportant une surface destinée à recevoir une paraison ou un récipient en verre chaud revêtue d'un lubrifiant, caractérisé en ce que ledit lubrifiant est un lubrifiant solide en bisulfure de tungstène obtenu par projection d'une poudre de bisulfure de tungstène. De tels éléments sont un moule, un canal de distribution, une plaque d'attente ou de transfert. Dans le cadre de l'invention, le bisulfure de tungstène est solidaire de la surface du moule, canal de distribution et/ou plaque d'attente ou de transfert qu'il recouvre. Il constitue un revêtement permanent, qui reste accroché sur la surface du moule, canal de distribution et/ou plaque d'attente ou de transfert qu'il recouvre, lors des différentes opérations de fabrication du récipient en verre.

Selon des modes de réalisation particuliers, un tel élément pour la fabrication d'un récipient en verre présente une ou plusieurs des caractéristiques additionnelles suivantes, voire toutes ces caractéristiques :
- le lubrifiant solide de bisulfure de tungstène présente une épaisseur moyenne appartenant à la gamme allant de 0,4 µm à 1,0 µm ;
- la surface à revêtir de lubrifiant solide de bisulfure de tungstène présente un Ra compris dans la gamme allant de 0,1 µm à 1 µm et/ou a une dureté comprise dans la gamme allant de 30 HRc à 60 HRc;
- le lubrifiant solide en bisulfure de tungstène est en partie incrusté dans la surface qu'il revêt et/ou comporte une structuration lamellaire dans la zone délimitant la surface en contact avec ladite paraison
   et/ou
- il correspond à un moule, et en particulier à un moule pour la fabrication de bouteilles en verre.

Un autre objet de l'invention est un procédé d'obtention d'un élément pour la fabrication d'un récipient en verre comprenant une étape de projection d'une poudre de bisulfure de tungstène, qui est précédée d'une étape de nettoyage et de traitement de la surface à revêtir.

Selon des modes de réalisation particuliers, le procédé d'obtention d'un élément pour la fabrication d'un récipient en verre présente une ou plusieurs des caractéristiques additionnelles suivantes, voire toutes ces caractéristiques :
- la surface à revêtir présente un Ra compris dans la gamme allant de 0,1 µm à 1 µm et/ou une dureté comprise dans la gamme allant de 30 HRc à 60 HRc,
   et
- la poudre de bisulfure de tungstène projetée est constituée d'éléments lamellaires dont le rapport W/S des pourcentages atomiques en tungstène et en souffre appartient à la gamme allant de 50% à 55%.

Diverses autres caractéristiques ressortent de la description faite ci-dessous en référence aux figures annexées qui montrent, à titre d'exemples non limitatifs, des formes de réalisation de l'objet de l'invention :
- la **figure 1** est un schéma représentant un procédé de fabrication d'un récipient en verre selon l'invention ;
- la **figure 2** est un schéma d'un moule de mise en forme d'un récipient en verre revêtu d'un lubrifiant solide selon l'invention ;
   et
- la **figure 3** est une photographie à l'aide d'un microscope électronique à balayage mettant en évidence un lubrifiant solide pouvant être utilisé selon l'invention.

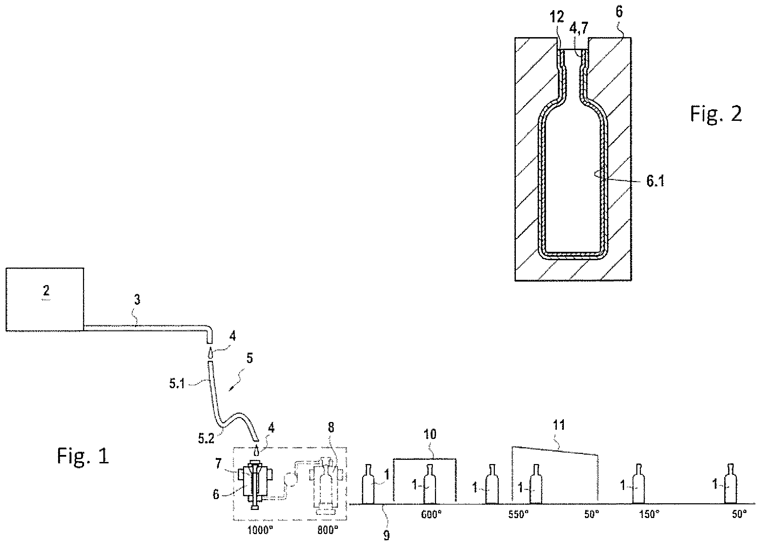

Comme illustré à la **figure 1**, un procédé de fabrication d'un récipient de verre **1** comporte une étape de fonte d'un mélange d'éléments fondamentaux classiquement utilisés pour la fabrication d'éléments en verre, tels que des récipients en verre. Un tel mélange comporte le plus souvent du sable, de la soude et du calcaire. Des éléments secondaires, des colorants, du verre concassé ou calcin peuvent être ajoutés au mélange pour faire varier les propriétés notamment mécaniques ou optiques, de l'élément de verre à fabriquer. Ce mélange est fondu dans un four **2**, en général à une température de l'ordre de 1500°C. Le mélange fondu forme alors du verre en fusion. A la sortie du four, le verre en fusion s'écoule dans un canal **3**, appelé feeder, jusqu'à un orifice de dimensions calibrées. La quantité qui s'écoule à travers l'orifice, appelée paraison **4**, est calibrée en fonction des dimensions souhaitées pour l'élément de verre. La paraison **4** est typiquement découpée à l'aide d'un ciseau en acier réfractaire. La paraison **4** tombe alors dans un canal de distribution **5**, qui l'achemine jusqu'à un moule **6**. Le canal de distribution **5** peut comporter des zones plus ou moins étirées **5.1** ou des zones courbes **5.2**. Le récipient en verre **1** obtenu après l'opération de moulage est alors déplacé sur une plaque d'attente ou de transfert **9**, notamment vers un four de traitement de surface **10**, puis vers une arche de recuisson **11**.

Selon une caractéristique essentielle de l'invention, la paroi interne du moule utilisé pour le façonnage de la paraison est, au moins en partie, voire en totalité, recouverte d'un revêtement en bisulfure de tungstène, comme mis en évidence sur l'exemple présenté **figure 2**. Ce revêtement en bisulfure de tungstène constitué d'une couche solide solidaire de la paroi joue le rôle d'agent de lubrification et va permettre un démoulage plus aisé d'une pièce en verre creuse **7**, obtenue par façonnage de la paraison **4**. De plus, lorsque la paraison **4** pénètre dans le moule, sa température est de l'ordre de 1000°C, de manière à être suffisamment malléable pour être mise en forme. Pour que la pièce obtenue **7** conserve sa forme, le moule **6** doit donc permettre une extraction de calories suffisante pour la rigidifier. Typiquement, la pièce en sortie d'un moule ébaucheur **6** est à une température de l'ordre de 800°C.

L'opération de moulage peut utiliser un seul moule et le plus souvent deux moules. Dans la majorité des cas, la paraison **4** est acheminée dans un moule dit ébaucheur. Un tel moule ébaucheur **6** permet de donner une première forme approximative à la paraison **4**, dite « ébauche » **7**. Comme illustré à la **figure 1**, cette ébauche **7** est alors transférée dans un moule dit « finisseur » **8**, dans lequel est donnée sa forme finale au récipient de verre **1.**

En particulier, le moule **6** est censé figer la paraison **4** dans la forme de l'ébauche, cette forme est donnée notamment à la paraison au moyen de l'empreinte du moule **6**. Si le transfert d'énergie thermique entre la paraison **4** et le moule **6** n'est pas suffisant, alors l'ébauche se déforme, et sa forme finale ne peut pas ensuite lui être donnée. Si l'ébauche colle à l'empreinte du moule **6** alors, elle ne peut pas ensuite en être sortie en conservant la forme finale souhaitée, lorsque l'on procède de manière classique à l'ouverture du moule. C'est la raison pour laquelle l'invention se propose de revêtir la partie de surface **6.1** du moule ébaucheur **6** en contact avec la paraison **4** avec un lubrifiant solide **12** en bisulfure de tungstène, tel que cela est représenté à la **figure 2**. En effet, le bisulfure de tungstène est d'une part, bon conducteur thermique et, d'autre part, les frottements entre la paraison ou le verre chaud sont faibles.

Dans le cadre de l'invention, il peut également être avantageux de recouvrir également la paroi interne du canal de distribution **5** de bisulfure de tungstène. En effet, lorsque la paraison **4** tombe dans le canal de distribution **5**, alors le point d'impact est soumis à des contraintes en frottement et en gradient de température qui entraînent une usure rapide. Typiquement, lorsque la paraison **4** touche le point d'impact, sa température est de l'ordre de 1100°C à 1200°C.

Lorsque la paraison **4** circule dans l'ensemble du canal de distribution **5**, la partie de surface du canal de distribution **5.1**, qui est au contact avec la paraison **4** en mouvement, est soumise à des contraintes en frottement et en gradient de température importantes, qui entraînent aussi une usure rapide. En particulier, lorsque la paraison **4** circule dans les zones courbes **5.2** du canal de distribution, elle est soumise à une force centrifuge qui augmente les frottements avec ces zones, entrainant leur usure accentuée. Aussi, selon un mode de réalisation de l'invention, la partie de surface du canal de distribution **5**, qui est au contact avec la paraison **4** en mouvement est également revêtue du lubrifiant solide en bisulfure de tungstène.

Enfin, dans le cadre de l'invention, il peut être avantageux de recouvrir également de bisulfure de tungstène, la surface de la plaque d'attente ou de transfert **9** destinée à recevoir le récipient en verre chaud obtenu. En effet, lorsque le récipient en verre **1** chaud est déplacé sur la plaque d'attente ou de transfert **9**, à la sortie du moule finisseur **8**, sa température est de l'ordre de 700°C. Lorsque le récipient en verre **1** traverse le four de traitement de surface **10** sa température est de l'ordre de 600°C. Dans l'arche de recuisson **11**, sa température passe de 600°C à 200°C. Ensuite, le récipient en verre est conditionné à température ambiante.

Par ailleurs, la durée de vie d'une plaque d'attente ou de transfert **9** passe généralement de 10 semaines sans revêtement en bisulfure de tungstène à 32 semaines lorsque celle-ci est revêtue du lubrifiant solide en bisulfure de tungstène selon l'invention.

Tout au long du procédé de fabrication du récipient en verre **1**, la paraison **4**, puis le récipient **1** subissent de fortes variations de température de l'ordre de 1000°C, du fait de différentes extractions de calories au cours des différentes étapes. Ces extractions consistent notamment en des transferts thermiques du verre en contact avec les canaux de distribution **5**, les moules **6** et les plaques de transfert ou d'attente **9**, par conduction à travers une couche d'interface. Aussi, de manière préférée, un revêtement en bisulfure de tungstène sera appliqué sur la majorité des surfaces en contact avec la paraison et le verre chaud, à savoir non seulement sur la paroi interne du moule **6** destiné à recevoir la paraison, sur la paroi interne du ou des canaux de distribution **5** et sur la surface réceptrice de la plaque d'attente ou de transfert **9**. Tous ces éléments pour la fabrication d'un récipient en verre sont classiquement en acier, et de préférence en acier inoxydable. Tout type d'acier peut être utilisé mais un traitement de surface est souhaitable au préalable afin d'apporter des propriétés anti-corrosion et/ou de dureté. Les métaux utilisés sont généralement de la fonte, acier inoxydable martensitique et alliages cuivreux.

Le procédé selon l'invention apporte une amélioration certaine aux procédés de fabrication de récipients en verre. Par récipients en verre, on entend toute pièce creuse, typiquement des bouteilles, pots, bols, vases, verres ...

Quelle que soit la surface à recouvrir, selon une caractéristique préférentielle, l'invention propose de soumettre les surfaces à revêtir en bisulfure de tungstène à un traitement de surface de telle sorte que leur rugosité Ra soit proche de 0,5 µm. Ceci permet notamment une meilleure accroche du bisulfure de tungstène à la surface.

Préférentiellement, les différentes parties de surface à revêtir ont une dureté appartenant à la gamme allant de 30 HRc à 60 HRc.

Selon l'invention, la surface à recouvrir de bisulfure de tungstène, qu'elle soit destinée au contact avec la paraison **4**, ou avec le récipient de verre chaud **1**, est soumise à un procédé de revêtement de surface qui consiste à projeter, à sec, une poudre de bisulfure de tungstène, de préférence à haute vitesse sous atmosphère contrôlée. Pour cela, la poudre de bisulfure de tungstène est projetée à très haute vitesse de l'ordre de 300 ms¹ dans un environnement contrôlé en termes de température, i.e. comprise entre 18 et 23°C et de pression, i.e. comprise entre 0,1 et 0,3 bars au-dessus de la pression atmosphérique. Une telle projection est réalisée en l'absence de solvant.

La projection sera, de préférence précédée d'une étape de préparation de la surface destinée à obtenir les caractéristiques de dureté et rugosité requise. Notamment, une opération de polissage pourra être mise en oeuvre. L'étape de préparation de la surface est précédée d'une étape de nettoyage. Selon une caractéristique préférée de l'invention, la poudre de bisulfure de tungstène projetée sur la surface est constituée d'éléments en lamelles dont le rapport du pourcentage atomique du tungstène sur le pourcentage atomique souffre appartient, de préférence, à la gamme allant de 50% à 55%. Plus préférentiellement, il s'agit d'une poudre de particules de WS₂ en lamelles dont le rapport des pourcentages atomiques en souffre et en tungstène est par exemple de l'ordre de 53%. Typiquement, les particules de la poudre sont de forme hexagonale, de largeur appartenant à la gamme allant de 0,8 µm à 1,5 µm et d'épaisseur inférieure à 100 nm.

Dans le cadre de l'invention, le revêtement en bisulfure de tungstène, quelle que soit la surface sur laquelle il est déposé, présente, de préférence, une épaisseur moyenne appartenant à la gamme de valeurs allant de 0,4 µm et à 1,0 µm. L'épaisseur moyenne du revêtement est définie et mesurée par une technique destructrice via un Microscope Electronique à Balayage. Typiquement, cette épaisseur moyenne de revêtement, est négligeable devant les dimensions des récipients en verre fabriqués selon l'invention. Ainsi, il suffit de soumettre un moule identique à ceux utilisés pour un procédé de fabrication de récipient en verre dans les techniques antérieures avec un lubrifiant tel que le kérosène, au procédé de revêtement objet de l'invention, au lieu et place du revêtement au kérosène, pour pouvoir ensuite l'utiliser dans le procédé de fabrication de récipient en verre objet de l'invention. De manière générale, un moule est composé de deux demi-moules positionnés l'un par rapport à l'autre de manière à ne faire qu'un, à fermer le moule. Ces deux demi-moules doivent coïncider pour que la pièce mise en forme ne laisse pas apparaître en sa surface, la fermeture des deux demi-moules. Ainsi, de manière avantageuse, l'épaisseur négligeable du revêtement permet de minimiser les défauts de fermetures des deux demi-moules. De manière avantageuse, cette épaisseur négligeable de revêtement est de répartition plus régulière sur la surface que ne l'est un lubrifiant liquide. En effet, un lubrifiant liquide est notamment soumis à la gravité ou à son évaporation, rendant ainsi sa répartition sur la surface immaîtrisable.

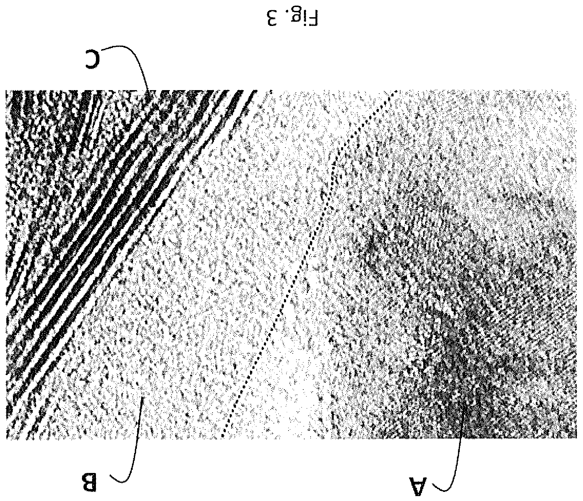

Selon une caractéristique avantageuse de l'invention illustrée à la **figure 3**, image prise à l'aide d'un microscope électronique à balayage, le lubrifiant solide en bisulfure de tungstène est en partie incrusté dans la surface **A** qu'il revêt et comporte une structuration lamellaire **C** dans une zone proche de la surface en contact avec ladite paraison. Cela permet de faciliter le glissement de la paraison **4** dans le moule **6** et, également le cas échéant, au long de son parcours dans le canal de distribution tout en protégeant la surface. Le WS2 améliore le coefficient de frottement lors du contact de glissement de la paraison, comparativement à un acier brut sans traitement.

Selon une caractéristique avantageuse de l'invention, l'état de surface du revêtement en bisulfure de tungstène est typiquement le même que celui de la surface qu'il recouvre.

Typiquement, pour une partie de surface dont la rugosité Ra est de 0,5 µm et la dureté de 38 HRc, revêtue d'un revêtement d'une épaisseur de 0,5 µm, alors :
- la couche incrustée a une épaisseur appartenant à la gamme allant de 50 à 100 nm alors que la structuration lamellaire a une épaisseur appartenant à la gamme allant de 500 à 1000 nm,
- le coefficient de frottement de la surface du revêtement est compris entre 0,03 et 0,07, ce qui permet de diminuer les frottements avec la paraison ou le verre chaud. Le coefficient de frottement d'une surface est mesuré en faisant tourner une éprouvette revêtue de WS2 et sur laquelle des charges sont posées.

## Revendications

1. Procédé de fabrication d'un récipient en verre comportant une étape de mise en forme d'une paraison au moyen d'un moule dont au moins une surface est revêtue d'un lubrifiant en interface entre ladite paraison et ladite surface du moule, **caractérisé en ce que** ledit lubrifiant est un lubrifiant solide en bisulfure de tungstène obtenu par projection d'une poudre de bisulfure de tungstène.

2. Procédé de fabrication d'un récipient en verre selon la revendication 1, **caractérisé en ce qu'**il comporte en outre une étape d'acheminement de ladite paraison jusqu'audit moule au moyen d'au moins un canal de distribution dont au moins une surface est revêtue d'un lubrifiant en interface entre ladite paraison et ladite surface du canal, **caractérisé en ce que** ledit lubrifiant est un lubrifiant solide en bisulfure de tungstène obtenu par projection d'une poudre de bisulfure de tungstène.

3. Procédé de fabrication d'un récipient en verre selon la revendication 1 ou 2, **caractérisé en ce qu'**il comporte en outre une étape de déplacement du récipient en verre chaud, obtenu à la suite de l'étape de mise en forme de la paraison au moyen du moule, sur une plaque d'attente ou de transfert dont la surface qui reçoit le récipient en verre chaud est recouverte d'un lubrifiant solide en bisulfure de tungstène obtenu par projection d'une poudre de bisulfure de tungstène.

4. Procédé de fabrication d'un récipient en verre selon l'une quelconque des revendications 1 à 3, **caractérisé en ce que** le lubrifiant solide en bisulfure de tungstène est en partie incrusté dans la surface qu'il revêt et comporte une structuration lamellaire dans la zone délimitant la surface en contact avec ladite paraison.

5. Procédé de fabrication d'un récipient en verre selon l'une quelconque des revendications 1 à 4, **caractérisé en ce que** le lubrifiant solide de bisulfure de tungstène présente une épaisseur moyenne appartenant à la gamme allant de 0,4 µm à 1,0 µm.

6. Procédé de fabrication d'un récipient en verre selon l'une quelconque des revendications 1 à 5, **caractérisé en ce que** la surface à revêtir de lubrifiant solide de bisulfure de tungstène présente un Ra appartenant à une gamme allant de 0,1 µm à 1 µm et/ou une dureté appartenant à la gamme allant de 30 HRc à 60 HRc.

7. Elément parmi un moule, une plaque d'attente ou de transfert ou un canal de distribution pour la fabrication d'un récipient en verre, comportant une surface destinée à recevoir une paraison ou un récipient en verre chaud revêtue d'un lubrifiant, **caractérisé en ce que** ledit lubrifiant est un lubrifiant solide en bisulfure de tungstène obtenu par projection d'une poudre de bisulfure de tungstène.

8. Elément selon la revendication 7, **caractérisé en ce que** le lubrifiant solide de bisulfure de tungstène présente une épaisseur moyenne appartenant à la gamme allant de 0,4 µm à 1,0 µm.

9. Elément selon l'une des revendications 7 ou 8, **caractérisé en ce que** la surface à revêtir de lubrifiant solide de bisulfure de tungstène présente un Ra appartenant à une gamme allant de 0,1 µm à 1 µm et/ou une dureté appartenant à la gamme allant de 30 HRc à 60 HRc.

10. Elément selon l'une quelconque des revendications 7 à 9 **caractérisé en ce qu'**il est un moule, et en particulier à un moule pour la fabrication de bouteilles, pots, bols, vases ou verres, en verre.

11. Procédé d'obtention d'un élément selon l'une quelconque des revendications 7 à 10, **caractérisé en ce qu'**il comprend une étape de projection d'une poudre de bisulfure de tungstène qui est précédée d'une étape de nettoyage et de traitement de la surface à revêtir.

12. Procédé d'obtention selon la revendication 11 **caractérisé en ce que** la poudre de bisulfure de tungstène projetée est constituée d'éléments lamellaires dont le rapport du pourcentage atomique du tungstène sur le pourcentage atomique de soufre appartient, de préférence, à la gamme allant de 50 % à 55 %.

13. Procédé d'obtention selon l'une quelconque des revendications 11 à 12 **caractérisé en ce que** la surface à revêtir de lubrifiant solide de bisulfure de tungstène présente un Ra appartenant à une gamme allant de 0,1 µm à 1 µm et/ou une dureté appartenant à la gamme allant de 30 HRc à 60 HRc.

## Patentansprüche

1. Verfahren zur Herstellung eines Behälters aus Glas, umfassend einen Schritt zum Formen eines Külbels mithilfe einer Form, von der mindestens eine Fläche mit einem Schmiermittel an der Schnittstelle zwischen dem Külbel und der Fläche der Form bedeckt ist, **dadurch gekennzeichnet, dass** das Schmiermittel ein festes Schmiermittel aus Wolframdisulfid ist, das durch das Aufspritzen eines Wolframdisulfidpulvers erhalten wird.

2. Verfahren zur Herstellung eines Behälters aus Glas nach Anspruch 1, **dadurch gekennzeichnet, dass** es ferner einen Schritt zur Beförderung des Külbels bis zu der Form mithilfe von mindestens einem Verteilungskanal umfasst, von dem mindestens eine Fläche mit einem Schmiermittel an der Schnittstelle zwischen dem Külbel und der Fläche des Kanals bedeckt ist, **dadurch gekennzeichnet, dass** das Schmiermittel ein festes Schmiermittel aus Wolframdisulfid ist, das durch das Aufspritzen eines Wolframdisulfidpulvers erhalten wird.

3. Verfahren zur Herstellung eines Behälters aus Glas nach Anspruch 1 oder 2, **dadurch gekennzeichnet, dass** es ferner einen Schritt zum Bewegen des heißen Behälters aus Glas, der nach dem Schritt zum Formen des Külbels mithilfe der Form erhalten wird, auf einer Warte- oder Transferplatte umfasst, deren Fläche, die den heißen Behälter aus Glas aufnimmt, mit einem festen Schmiermittel aus Wolframdisulfid bedeckt ist, das durch das Aufspritzen eines Wolframdisulfidpulvers erhalten wird.

4. Verfahren zur Herstellung eines Behälters aus Glas nach einem der Ansprüche 1 bis 3, **dadurch gekennzeichnet, dass** sich das feste Schmiermittel aus Wolframdisulfid teilweise in der Fläche festsetzt, die es bedeckt und eine lamellare Strukturierung in der Zone umfasst, welche die Fläche begrenzt, die mit dem Külbel in Kontakt steht.

5. Verfahren zur Herstellung eines Behälters aus Glas nach einem der Ansprüche 1 bis 4, **dadurch gekennzeichnet, dass** das feste Schmiermittel aus Wolframdisulfid eine mittlere Dicke aufweist, die zu dem Bereich gehört, der von 0,4 µm bis 1,0 µm reicht.

6. Verfahren zur Herstellung eines Behälters aus Glas nach einem der Ansprüche 1 bis 5, **dadurch gekennzeichnet, dass** die mit dem festen Schmiermittel aus Wolframdisulfid zu bedeckende Fläche einen Ra-Wert, der zu einem Bereich gehört, der von 0,1 µm bis 1 µm reicht, und/oder eine Härte aufweist, die zu dem Bereich gehört, der von 30 HRc bis 60 HRc reicht.

7. Element aus einer Form, einer Warte- oder Transferplatte oder einem Verteilungskanal zur Herstellung eines Behälters aus Glas, umfassend eine Fläche, die dazu bestimmt ist, ein Külbel oder einen heißen Behälter aus Glas aufzunehmen, die mit einem Schmiermittel bedeckt ist, **dadurch gekennzeichnet, dass** das Schmiermittel ein festes Schmiermittel aus Wolframdisulfid ist, das durch das Aufspritzen eines Wolframdisulfidpulvers erhalten wird.

8. Element nach Anspruch 7, **dadurch gekennzeichnet, dass** das feste Schmiermittel aus Wolframdisulfid eine mittlere Dicke aufweist, die zu dem Bereich gehört, der von 0,4 µm bis 1,0 µm reicht.

9. Element nach einem der Ansprüche 7 oder 8, **dadurch gekennzeichnet, dass** die mit dem festen Schmiermittel aus Wolframdisulfid zu bedeckende Fläche einen Ra-Wert, der zu einem Bereich gehört, der von 0,1 µm bis 1 µm reicht, und/oder eine Härte aufweist, die zu dem Bereich gehört, der von 30 HRc bis 60 HRc reicht.

10. Element nach einem der Ansprüche 7 bis 9, **dadurch gekennzeichnet, dass** es eine Form, und insbesondere eine Form zur Herstellung von Flaschen, Töpfen, Schalen, Vasen oder Gläsern aus Glas ist.

11. Verfahren zum Erhalten eines Elements nach einem der Ansprüche 7 bis 10, **dadurch gekennzeichnet, dass** es einen Schritt zum Aufspritzen eines Wolframdisulfidpulvers umfasst, dem ein Schritt zur Reinigung und Behandlung der zu bedeckenden Fläche vorausgeht.

12. Verfahren zum Erhalten nach Anspruch 11, **dadurch gekennzeichnet, dass** das aufgespritzte Wolframdisulfidpulver aus lamellaren Elementen gebildet ist, deren Verhältnis des Atomprozents von Wolfram zu dem Atomprozent von Schwefel vorzugsweise zu dem Bereich gehört, der von 50 % bis 55 % reicht.

13. Verfahren zum Erhalten nach einem der Ansprüche 11 bis 12, **dadurch gekennzeichnet, dass** die mit dem festen Schmiermittel aus Wolframdisulfid zu bedeckende Fläche einen Ra-Wert, der zu einem Bereich gehört, der von 0,1 µm bis 1 µm reicht, und/oder eine Härte aufweist, die zu dem Bereich gehört, der von 30 HRc bis 60 HRc reicht.

## Claims

1. A method for manufacturing a glass container including a step of shaping a parison by means of a mold whose at least one surface is coated with a lubricant interfaced between said parison and said mold surface, **characterized in that** said lubricant is a solid lubricant made of tungsten disulfide obtained by spraying a tungsten disulfide powder.

2. The method for manufacturing a glass container according to claim 1, **characterized in that** it further includes a step of conveying said parison to said mold by means of at least one distribution channel whose at least one surface is coated with a lubricant interfaced between said parison and said channel surface, **characterized in that** said lubricant is a solid lubricant made of tungsten disulfide obtained by spraying a tungsten disulfide powder.

3. The method for manufacturing a glass container according to claim 1 or 2, **characterized in that** it further includes a step of moving the hot glass container, obtained as a result of the step of shaping the parison by means of the mold, on a standby or transfer plate whose surface that receives the hot glass container is covered with a solid lubricant made of tungsten disulfide obtained by spraying a tungsten disulfide powder.

4. The method for manufacturing a glass container according to any one of claims 1 to 3, **characterized in that** the solid lubricant made of tungsten disulfide is partly embedded in the surface it coats and includes a lamellar structuring in the area delimiting the surface in contact with said parison.

5. The method for manufacturing a glass container according to any one of claims 1 to 4, **characterized in that** the solid lubricant made of tungsten disulfide has a medium thickness belonging to the range from 0.4 µm to 1.0 µm.

6. The method for manufacturing a glass container according to any one claims 1 to 5, **characterized in that** the surface to be coated with solid lubricant made of tungsten disulfide has a Ra belonging to a range from 0.1 µm to 1 µm and/or a hardness belonging to the range from 30 HRc to 60 HRc.

7. An element among a mold, a standby or transfer plate or a distribution channel for manufacturing a glass container, including a surface intended to receive a parison or a hot glass container coated with a lubricant, **characterized in that** said lubricant is a solid lubricant made of tungsten disulfide obtained by spraying a tungsten disulfide powder.

8. The element according to claim 7, **characterized in that** the solid lubricant made of tungsten disulfide has an average thickness belonging to the range from 0.4 µm to 1.0 µm.

9. The element according to any one of claims 7 or 8, **characterized in that** the surface to be coated with solid lubricant made of tungsten disulfide has a Ra belonging to a range from 0.1 µm to 1 µm and/or a hardness belonging to the range from 30 HRc to 60 HRc.

10. The element according to any one of claims 7 to 9 **characterized in that** it is a mold, and particularly a mold for manufacturing bottles, pots, bowls, vases or glasses, made of glass.

11. A method for obtaining an element according to any one of claims 7 to 10, **characterized in that** it comprises a step of spraying a tungsten disulfide powder which is preceded by a step of cleaning and treating the surface to be coated.

12. The obtaining method according to claim 11 **characterized in that** the sprayed tungsten disulfide powder consists of lamellar members whose ratio of the atomic percentage of tungsten to the atomic percentage of sulphur belongs, preferably, to the range from 50% to 55%.

13. The obtaining method according to any one of claims 11 to 12 **characterized in that** the surface to be coated with solid lubricant made of tungsten disulfide has a Ra belonging to a range from 0.1 µm to 1 µm and/or a hardness belonging to the range from 30 HRc to 60 HRc.
